Europäisches Patentamt

European Patent Office

Office européen des brevets

(11) Veröffentlichungsnummer: **0 173 930**
**A2**

(12) # EUROPÄISCHE PATENTANMELDUNG

(21) Anmeldenummer: 85110638.5

(22) Anmeldetag: 23.08.85

(51) Int. Cl.⁴: **G 02 B 6/28**
**G 02 B 6/34**

(30) Priorität: 01.09.84 DE 3432239
31.01.85 DE 3503203

(43) Veröffentlichungstag der Anmeldung:
12.03.86 Patentblatt 86/11

(84) Benannte Vertragsstaaten:
DE FR GB

(71) Anmelder: International Standard Electric Corporation
320 Park Avenue
New York New York 10022(US)

(84) Benannte Vertragsstaaten:
FR GB

(71) Anmelder: Standard Elektrik Lorenz Aktiengesellschaft
Lorenzstrasse 10
D-7000 Stuttgart 40(DE)

(84) Benannte Vertragsstaaten:
DE

(72) Erfinder: Fussgänger, Kurt, Dr.
Königsberger Strasse 1
D-7148 Remseck 2(DE)

(72) Erfinder: Vollmer, Theodor
Hölderlinstrasse 53
D-7000 Stuttgart 1(DE)

(74) Vertreter: Schmidt, Werner, Dipl.-Phys. et al,
c/o Standard Elektrik Lorenz AG Patent- und
Lizenzwesen Kurze Strasse 8 Postfach 300 929
D-7000 Stuttgart 30(DE)

(54) Optischer Multiplexer/Demultiplexer.

(57) Bei dem Multiplexer/Demultiplexer ist auf eine halbkugelförmige Linse (2) ein Reflexionsgitter (1) aufgebracht.
Die Lichtstrahlen gelangen zu der Linse über Lichtleitfasern
oder über ein integriert-optisches Bauelement, in dem
Wellenleiter vorgesehen sind.

Fig.1a

EP 0 173 930 A2

K.Fußgänger –Th.Vollmer 2-3

Optischer Multiplexer/Demultiplexer

Die Erfindung betrifft einen optischen Multiplexer/Demultiplexer mit einer Abbildungsoptik und einem Reflexionsgitter. Ein solches Bauelement ist aus dem Aufsatz "Optischer Kugellinsen-Demultiplexer" in NTZ, Band 37 (1984), Heft 6, Seiten 346-351 bekannt.

Aufgabe der Erfindung ist es, einen auf einfache Weise herstellbaren Multiplexer/Demultiplexer anzugeben.

Die Lösung dieser Aufgabe erfolgt mit den im Anspruch 1 angegebenen Mitteln. Vorteilhafte Weiterbildungen sind den Unteransprüchen zu entnehmen.

Auf die Vorteile wird im Rahmen der Beschreibung Bezug genommen.
Die Erfindung wird anhand der Zeichnungen beispielsweise näher erläutert. Es zeigt:

Fig. 1a      eine schematische Darstellung eines ersten Ausführungsbeispiels,

Fig. 1b      ein Beispiel für den Strahlengang des Lichts für die Anordnung nach Fig. 1a,

ZT/P1-Sm/R
05.08.1985

K.Fußgänger 2-3

Fig. 2          eine mögliche Anordnung der Lichtleitfasern,

Fig. 3 bis      schematische Darstellungen weiterer Aus-
Fig. 5          führungsbeispiele.

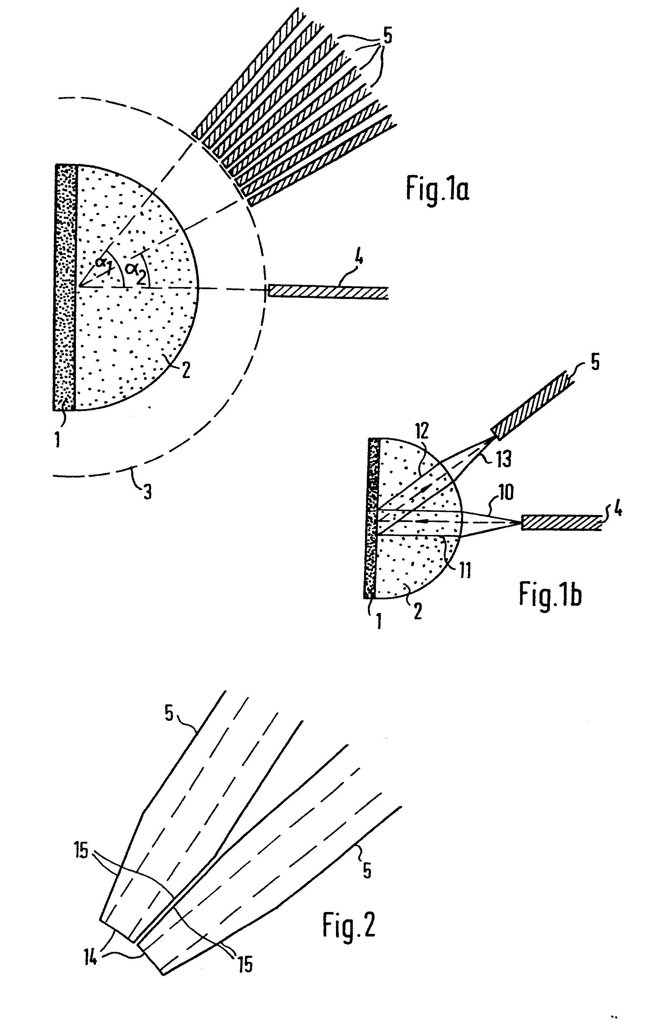

Bei dem Ausführungsbeispiel nach Fig. 1a ist eine halbkugelförmige Linse 2 vorgesehen, auf deren ebener Fläche
ein Reflexionsgitter 1 aufgebracht ist. Der Radius der
Linse ist 22,7 mm, die Gitterkonstante g des Gitters ist
3,3 $\mu$m und der Brechungsindex n des Glases, aus dem die Linse
gebildet ist, ist 1,66 (Glas: LaKN12 von Schott) bei Wellenlänge 1,25 $\mu$m.
Weiterhin sind eine einzelne Lichtleitfaser 4 und eine
Gruppe von Lichtleitfasern 5 vorgesehen. Beim Multiplexbetrieb werden die einzelnen Strahlen, die zur Übertragung zusammengefaßt werden sollen, dem Multiplexer
über Lichtleitfasern 5 zugeführt und der Lichtstrahl, der
aus Teilstrahlen unterschiedlicher Wellenlängen besteht,
wird über die Lichtleitfaser 4 weitergeleitet. Beim Demultiplexbetrieb wird der Lichtstrahl, der in seine
Komponenten, die voneinander unterschiedliche Wellenlängen
aufweisen, aufgeteilt werden soll,   über die Lichtleitfaser 4 dem Multiplexer zugeführt und die einzelnen Komponenten werden über die Lichtleitfasern 5 weitergeleitet.
Der Multiplexer/Demultiplexer ist ein reziprokes Bauelement,
so daß er sowohl als Multiplexer als auch als Demultiplexer
eingesetzt werden kann.

Anhand der Fig. 1b wird der Strahlengang zwischen der Lichtleitfaser 4 und einer Lichtleitfaser 5 erläutert. Die Linse

K.Fußgänger 2 -3

macht aus dem aus der Lichtleitfaser 4 austretenden divergenten Licht 10 paralleles Licht 11. Aus dem nach der Reflexion an dem Reflexionsgitter 1 immer noch parallelen Licht 12 macht die Linse 2 konvergentes Licht 13, das auf die Lichtleitfaser 5 abgebildet wird.

Daraus folgt, daß bei der in der Fig. 1a gezeigten Anordnung die Abstände der Lichtleitfasern 5 sowie der Lichtleitfaser 4 vom Mittelpunkt der Linse gleich der Brennweite der Linse sein müssen. Die Brennweite wiederum hängt unter anderem von dem Brechungsindex des Materials, aus dem die Linse besteht,ab,und der Brechungsindex des Materials ist wellenlängenabhängig. Daraus ergibt sich, daß die Abstände der Lichtleitfasern 5 von der Linse 2 - wenn auch nur geringfügig - voneinander unterschiedlich sein müssen, wenn der von der Linse 2 ausgehende Lichtstrahl exakt auf die Lichtleitfasern abgebildet werden soll. Für die Praxis reicht es jedoch in vielen Fällen aus, einen mittleren Abstand zu wählen, der gebildet ist aus dem Mittelwert der Brennweiten, die sich für die einzelnen Wellenlängen ergeben. Man kann also die Enden der Lichtleitfasern 4 und 5 auf einer Linie 3 anordnen, die konzentrisch zum Mittelpunkt der Linse 2 ist. Es ist an sich bekannt, daß ein Reflexionsgitter Licht unterschiedlicher Wellenlänge in unterschiedliche Richtungen $\alpha_1$, $\alpha_2$ ablenkt. Dies wird bei dem Multiplexer/Demultiplexer dazu ausgenützt, den über die Lichtleitfaser 4 dem Demultiplexer zugeführten Lichtstrahl in seine einzelnen Komponenten aufzuteilen. Hierzu werden die Lichtleitfasern 5 so angeordnet, daß auf sie jeweils der Lichtstrahl mit der gewünschten Wellenlänge auftrifft. Folglich hängen die Winkel zwischen den Linien Lichtleitfaser 5/Mittelpunkt der

K.Fußgänger 2 -3

Linse 2 und Lichtleitfaser 4/Mittelpunkt der Linse 2 von
der Gitterkonstanten g und der jeweiligen Wellenlänge ab.

Eine praktische Realisierung des Multiplexers/Demulti-
plexers kann so ausschauen: die Linse 2, das Reflexionsgitter 1 und der eine Teil der Lichtleitfasern 4 und 5
sind im Inneren eines Gehäuses angeordnet und aus dem Gehäuse schaut jeweils der andere Teil der Lichtleitfasern
4 und 5 heraus. An diese aus dem Gehäuse herausschauenden
Faserschwänze können weitere Lichtleitfasern angespleißt
werden. Es ist auch möglich, für die Verbindung zwischen
den im Inneren des Gehäuses angeordneten Lichtleitfasern 4
und 5 und weiteren, mit diesen zu verbindenden, Lichtleitfasern, Steckverbindungen vorzusehen. Diese befinden sich
dann in der Gehäusewand.

Um optische Verluste und sphärische und chromatische
Aberrationklein zu halten wählt man den Brechungsindex n
des Materials der Linse so groß wie möglich.

Der neue Multiplexer/Demultiplexer ist einfach herzustellen.
Bei einem ersten Herstellungsverfahren wird ein Reflexionsgitter 1 auf die ebene Fläche der halbkugelförmigen Linse
aufgekittet. Die Brechzahl des optischen Kittes stimmt
dabei mit der Brechzahl des Linsenmateriales überein.
Bei einem zweiten Herstellungsverfahren wird das Reflexionsgitter 1 direkt auf der ebenen Oberfläche der
halbkugelförmigen Linse erzeugt, nämlich dadurch, daß man
die notwendigen Gitterlinien (beispielsweise) durch
Ritzen auf der ebenen Linsenoberfläche herstellt und die
Rückseite mit Gold oder Silber verspiegelt.

K.Fußgänger 2-3

Damit der Gitter-MUX/DEMUX eine zur Spektralbreite der verwendeten Laser passende optische Kanalbandbreite erreicht, ist es wünschenswert, daß die Lichtleitfasern 5 einander möglichst dicht benachbart sind. Dies ist dann der Fall, wenn die einzelnen Lichtleitfasern aneinander anstoßen. Der Abstand der Kerne von benachbarten Lichtleitfasern, auf die die auszukoppelnden Lichtstrahlen abgebildet werden, ist dann durch den Außendurchmesser der Lichtleitfasern bestimmt. Um einen kleineren Abstand der Kerne 14 (Fig. 2) der Lichtleitfasern 5 zu erhalten, ist es von Vorteil, die Enden 15 der Lichtleitfasern 5 abzuschleifen.

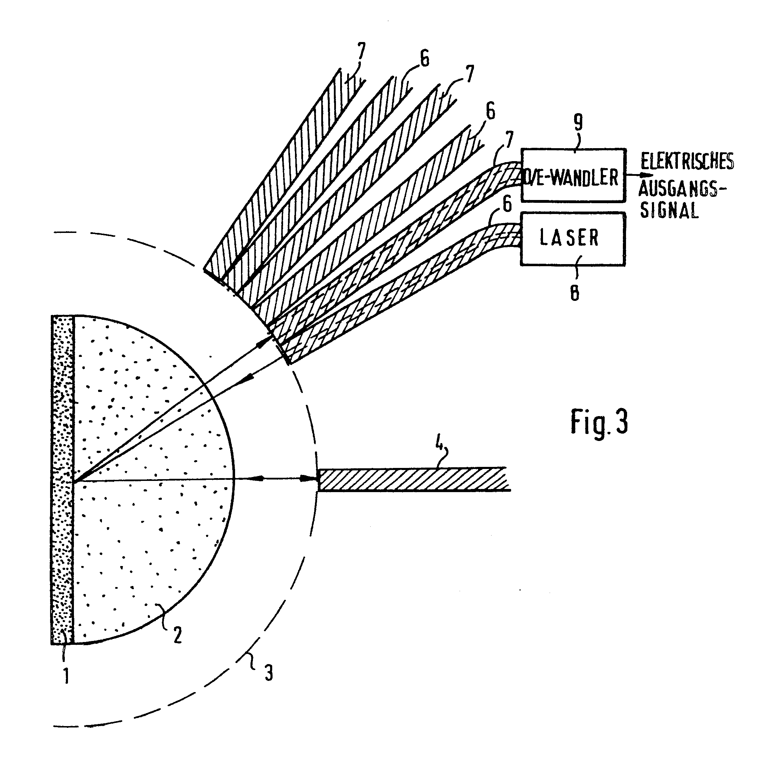

Multiplexer/Demultiplexer werden beispielsweise an den Endstellen einer bidirektionalen Übertragungsstrecke angeordnet. Bei einer solchen Übertragungsstrecke ist es häufig der Fall, daß für die beiden Übertragungsrichtungen Licht mit unterschiedlichen Wellenlängen verwendet wird. Ein Multiplexer/Demultiplexer, der für eine solche Anwendung besonders geeignet ist, wird anhand der Fig. 3 erläutert.

Wie bei dem Ausführungsbeispiel nach Fig. 1 ist auch hier wieder eine halbkugelförmige Linse 2 vorgesehen, auf die ein Reflexionsgitter 1 aufgebracht ist. Weiterhin ist eine Lichtleitfaser 4 vorhanden, die den Lichtstrahl dem Demultiplexer zuführt oder den Lichtstrahl von dem Multiplexer aus weiterleitet. Während jedoch bei der Anordnung nach Fig. 1 mehrere untereinander gleichartige Lichtleitfasern 5 vorgesehen sind, sind bei der Anordnung nach Fig. 3 alternierend Monomodelichtleitfasern 6 und Multimodelichtleitfasern 7 vorgesehen. Dies hat folgenden Vorteil: Multimodelichtleitfasern haben im Vergleich zu

K.Fußgänger 2 -3

Monomodelichtleitfasern eine größeren Kerndurchmesser. Dadurch werden an die Abbildung der Lichtstrahlen, die bei dem Demultiplexbetrieb in die Multimodelichtleitfasern 7 einzukoppeln sind, keine so hohen Anforderungen gestellt. Es reicht aus, für den Abstand der Lichtleit- fasern 7 von der Linse 2 einen Abstand zu wählen, der gleich dem Mittelwert derjenige Abstände ist, die für eine exakte Abbildung des Lichts auf die Lichtleitfasern erforderlich wären. Die Anordnung ist so gewählt, daß die Multimodelichtleitfasern nur für den Demultiplexbetrieb verwendet werden. Die zwischen den Multimodelichtleitfasern 7 angeordneten Monomodelichtleitfasern 6 werden für den Multiplexbetrieb verwendet. Durch sie werden Licht- strahlen mit unterschiedlichen Wellenlängen über die op- tische Linse 2 zu dem Reflexionsgitter geleitet und ge- langen dann nach der Reflexion an dem Reflexionsgitter 1 zu dem Lichtwellenleiter 4 und werden über diesen weiter- geleitet.

Für die praktische Realisierung des Multiplexers/Demulti- plexers gilt das für das Ausführungsbeispiel nach Fig. 1 Gesagte sinngemäß, daß nämlich die Linse 2, das Reflexions- gitter 1 und die Lichtleitfasern 4, 6 und 7 in einem Gehäuse angeordnet sind und daß jeweils Lichtleitfaser- schwänze aus dem Gehäuse herausragen. Es ist weiterhin möglich, in dem Gehäuse zusätzlich auch die Laser 8, die die Lichtstrahlen, die einander überlagert werden sollen, abgeben, und die optisch/elektrischen Wandler, denen die durch den Demultiplexer erzeugten Lichtstrahlen zugeführt werden, anzuordnen. Sind auch die optisch/elektrischen Wandler und die Laser 8 in dem Gehäuse angeordnet, dann

K.Fußgänger 2-3

führen von dem Gehäuse eine Lichtleitfaser 4 und elektrische Leitungen nach außen. Man erhält ein sehr kompaktes Bauelement.

Anstelle einer halbkugelförmigen Linse 2 können auch Linsen mit anderen Formen verwendet werden; es ist lediglich erforderlich, daß eine ebene Fläche vorhanden ist, auf die das Reflexionsgitter aufgebracht werden kann. Von Vorteil ist eine paraboloidförmige Linse, da sie hinsichtlich der sphärischen Aberration bei der Abbildung der Lichtstrahlen gute Ergebnisse aufweist.

Eine Minimierung der Reflexionsverluste erhält man dann, wenn man auf das Gitter linear polarisiertes Licht richtet und die Hauptpolarisationsrichtung senkrecht zu den Gitterlinien ausgerichtet ist. Hierzu ist es erforderlich, daß die Lichtleitfasern 4 und 5 (oder 6) polarisationserhaltende Lichtleitfasern sind.

Um die Einfügungsverluste pro Wellenlängen-Kanal im Gitter-Multiplexer bzw. -Demultiplexer klein zu halten, werden die halbkugelförmige Linsenoberfläche und die Lichtleitfaserenden mit Antireflexschichten versehen.

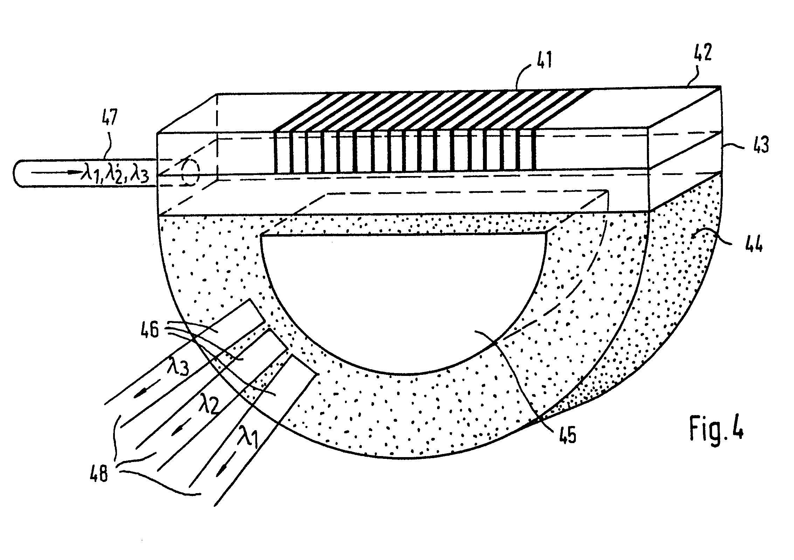

Der Multiplexer/Demultiplexer kann in vorteilhafter Weise auch in der Technik der integrierten Optik realisiert werden. Ein Beispiel wird anhand der Fig. 4 erläutert.

0173930

K.Fußgänger ·2-3

Anhand der Fig. 4 wird nachfolgend ein vorteilhaftes Ausführungsbeispiel erläutert, bei dem die Realisierung in der Technik der integrierten Optik erfolgt.

Es wird ein Gitter verwendet, das in einem Photoresistmaterial erzeugt wird. Dies ist an sich bekannt. Hierzu
wird beispielsweise verwiesen auf das Buch "Optische
Nachrichtentechnik" von H.G.Unger, Elitera-Verlag, Seiten
107 bis 114. Das Bauelement weist weiterhin einen Filmwellenleiter auf. Diese sind ebenfalls an sich bekannt;
z. B. aus dem genannten Buch von H.G.Unger, S. 19. Bringt
man ein solches Gitter auf einen Filmwellenleiter auf,
dann erfolgt eine Reflexion des Lichts, wobei die Reflexionswinkel wellenlängenabhängig, sind. Hierzu wird verwiesen auf
das Buch "Topics in Applied Physics", Band 7, Springer-
Verlag, Berlin, 1979, Seiten 110-112, insbesondere auf die
Fig. 3.14b auf Seite 112.

Bei dem Ausführungsbeispiel wird dem Multiplexer/Demulti-
plexer (die Erläuterung erfolgt für die Betriebsart
"Demultiplexer") von links über eine Monomodelichtleitfaser 47 Licht zugeführt, das drei Wellenlängen $\lambda_1$, $\lambda_2$, $\lambda_3$
enthält. Das Licht ist parallel und breitet sich in einem
Filmwellenleiter 43, der eine blattförmige Form hat, aus.
Über dem Filmwellenleiter 43 ist, wie oben erwähnt, das
Gitter 41, das in einem Photoresistmaterial 42 gebildet
ist, angeordnet. Das Gitter wirkt als Reflexions-Beugungsgitter. Seine Funktion ist aus den zitierten Literaturstellen bekannt. Außer Reflexionen in den gewünschten
Richtungen passiert ein Teil des Lichts die Photoresistschicht. Um die Verluste gering zu halten, wird (in der

K.Fußgänger 2 -3

Zeichnung nicht dargestellt) auf die Photoresistschicht
eine reflektierende Schicht, z. B. Silber, aufgebracht.

Es erfolgt eine wellenlängenabhängige Reflexion des Lichts
und zwar - bei der gewählten Darstellung, bei der das
Licht von links einfällt - in Richtungen, die nach links
unten zeigen. In diesen Richtungen befindet sich ein
lichtdurchlässiges Substrat 44,z. B. aus Lithiumniobat,
das mit dem Filmleiter 43 verbunden ist. In dem Substrat
breitet sich das reflektierte parallele Licht aus und
trifft auf eine in dem Substrat realisierte Linse 45, die
das parallele Licht zu konvergentem Licht macht. Die
Linse wird in an sich bekannter Weise durch ein geeignetes
(z. B. parabelförmiges) Brechzahlprofil realisiert. Um
dies zu erhalten, läßt man bei der Herstellung in der
gewünschten Weise Titandioxid in das Lithiumniobatsubstrat
eindiffundieren.

In dem Substrat 44 sind weiterhin Wellenleiter 46 realisiert, die so zueinander und relativ zu der Linse 45 angeordnet sind, daß auf sie durch die Linse 45 einer der
durch Reflexion erzeugten Lichtstrahlen, die jeweils eine
Wellenlänge $\lambda_1$, $\lambda_2$ oder $\lambda_3$ aufweisen, abgebildet wird.
Diese Wellenleiter sind mit Lichtleitfasern 48 verbindbar,
über die die Lichtstrahlen, die jeweils eine Wellenlänge
aufweisen, weitergeleitet werden.

Mit dem für den Demultiplexbetrieb beschriebenen Bauelement
ist auch Multiplexbetrieb möglich. Ferner besteht die Möglichkeit, das in der Technik der integrierten Optik realisierte Bauelement so auszugestalten, daß es auch die oben
erwähnten Laser und optisch/elektrische Wandler enthält.

K.Fußgänger 2 -3

Geringe Verluste bei der Reflexion am Gitter erhält man mit einem geblazeten Sägezahngitter.

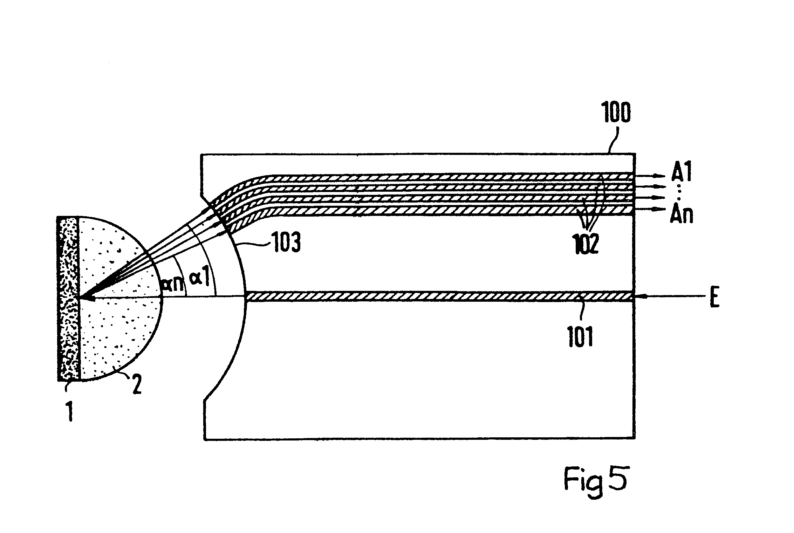

Ein weiteres Ausführungsbeispiel wird anhand der Fig. 5 erläutert. Die Beschreibung erfolgt anhand des Demultiplexbetriebs. Für den Multiplexbetrieb gilt das Entsprechende.

Der Lichtstrahl E wird von dem Demultiplexer in die verschiedenfrequenten Teilstrahlen A1...An aufgeteilt, indem Licht des Eingangslichtstrahls frequenzabhängig in unterschiedliche Richtungen $\alpha_1, ....., \alpha_n$ reflektiert wird.

In einem integriert-optischen Bauelement 100 sind mehrere Lichtwellenleiter 101 und 102 realisiert. Diese entsprechen den Lichtleitfasern 4, 5, 6 und 7 bei den bisherigen Ausführungsbeispielen. Über einen ersten Lichtwellenleiter 101 wird der Eingangslichtstrahl E zu der Linse 2 geleitet. Über weitere Lichtwellenleiter 102 werden die Ausgangslichtstrahlen zu dem Ausgang des Demultiplexers geleitet. Die weiteren Lichtwellenleiter 102 sind in dem integriert-optischen Bauelement 100 so angeordnet, daß sie in dem der Abbildungsoptik benachbarten Bereich in die Richtungen, aus denen die Ausgangslichtstrahlen, die durch die weiteren Lichtwellenleiter dem Ausgang des Demultiplexers zugeführt werden sollen, auf das integriert-optische Bauelement auftreffen. Daraus ergibt sich, daß die Lichtwellenleiter in diesem Bereich des inte-

0173930

K.Fußgänger 2-3

griert-optischen Bauelements radial zum Brennpunkt der Abbildungsoptik 2 angeordnet sind. In dem dem Ausgang des
Demultiplexers benachbarten Bereich des integriert-optischen Bauelements sind die weiteren Lichtwellenleiter
102 zueinander parallel angeordnet.

Dadurch, daß die Lichtstrahlen nicht mehr in einzelnen
Lichtleitfasern geleitet werden, sondern in einem inte-
griert-optischen Bauelement, müssen nicht mehr mehrere
einzelne Lichtleitfasern so justiert werden, daß die Teilstrahlen optimal in diese eingekoppelt werden, sondern es
muß nur noch das einzige integriert-optische Bauelement
justiert werden. Weiterhin ist es möglich, die einzelnen
Wellenleiter im Bereich der Abbildungsoptik in dem inte-
griert-optischen Baulement so anzuordnen, daß sie, verglichen mit der Lösung, bei der einzelne Lichtleitfasern
verwendet werden, zueinander enger benachbart sind. Dadurch wird die optische Bandbreite des Demultiplexers erhöht. Weil die Lichtwellenleiter im Bereich des Ausgangs
des Demultiplexers zueinander parallel sind, sind die Verbindungsmittel, durch die das Auskoppeln der Ausgangslichtstrahlen aus dem Demultiplexer und das Einkoppeln
dieser Ausgangslichtstrahlen in weitere Übertragungsmittel
bewirkt werden, einfach realisierbar z. B. durch Steckelemente.

Diese Lösung ist auch gut für die Integration weiterer
Elemente geeignet. So ist es beispielsweise möglich, das
integriert-optische Bauelement so zu realisieren, daß es
nicht nur die Lichtwellenleiter sondern auch op-
tisch/elektrische Wandler, denen das umzuwandelnde Licht
direkt von den weiteren Wellenleitern zugeführt wird, enthält. Sinngemäß dasselbe gilt für die Sendeelemente, z. B.

0173930

K.Fußgänger 2-3

Laserdioden, bei der Verwendung als Multiplexer. Bei gleichzeitigem Betrieb als Multiplexer und Demultiplexer enthält das integriert-optische Bauelement dann optisch/elektrische Wandler und Sendeelemente.

Es wurde bereits erwähnt, daß es zur optimalen Abbildung der Ausgangslichtstrahlen erforderlich ist, daß der Abstand von der Abbildungsoptik 2 zu den weiteren Lichtwellenleitern 102 frequenzabhängig gewählt werden sollte. Während diese Forderung bei der Realisierung des Demultiplexers mit einzelnen Lichtleitfasern kaum zu verwirklichen ist, kann diese Forderung bei der neuen Lösung in vorteilhafter Weise leicht dadurch erfüllt werden, daß die Oberfläche des integriert-optischen Bauelements, in der die weiteren Lichtwellenleiter enden, geeignet geformt ist. Der Verlauf dieser Fläche 103 wird in Bezug auf die Abbildungsoptik durch zwei Forderungen festgelegt:
- die Lichtstrahlen sollen auf diese Fläche senkrecht auftreffen, und
- der Abstand Abbildungsoptik zur Fläche ist entsprechend den optischen Abbildungsgesetzen abhängig von der Frequenz des Ausgangslichtstrahls, der durch den betrachteten Lichtwellenleiter zum Ausgang des Demultiplexers geleitet werden soll, so gewählt, daß der Ausgangslichtstrahl optimal auf den Lichtwellenleiter abgebildet wird.

Wenn bei der Realisierung der Oberfläche diese Forderungen erfüllt sind, dann werden in vorteilhafter Weise die beim Einkoppeln verursachten Verluste gering gehalten. Unter einer optimalen Abbildung auf den Wellenleiter soll hier diejenige Abbildung verstanden werden, bei der die Fläche des abgebildeten Lichtstrahls gleich der Querschnittsfläche des Wellenleiters ist.

Bei der bisherigen Beschreibung wurde davon ausgegangen, daß die Abbildungsoptik mit dem Reflexionsgitter und das integriert-optische Bauelement zwei Bauteile sind, die durch geeignete Mittel in der erforderlichen Position gehalten werden. Es ist jedoch auch möglich, daß der komplette Multiplexer/Demultiplexer als integriert-optisches Bauelement realisiert ist. In diesem Fall bestehen die Abbildungsoptik 2 und der Zwischenraum zwischen Abbildungsoptik 2 und dem integriert-optischen Bauelement 100 aus einem lichtdurchlässigen Substrat. Die Abbildungsoptik wird durch ein geeignetes (z. B. parabelförmiges) Brechzahlprofil realisiert.

Auf nähere Einzelheiten, z. B. wie das integriert-optische Bauelement zu realisieren ist, wird hier nicht näher eingegangen, da dies fachmännisches Wissen ist.

ZT/P1-Sm/R, 05.08.1985

0173930

STANDARD ELEKTRIK LORENZ
  AKTIENGESELLSCHAFT
  S T U T T G A R T


K.Fußgänger-Th.Vollmer 2-3

Patentansprüche

1.  Optischer Multiplexer/Demultiplexer mit einer Abbildungsoptik und einem Reflexionsgitter, d a d u r c h
g e k e n n z e i c h n e t, daß die Abbildungsoptik (2)
zumindest eine ebene Fläche aufweist und direkt mit dem
Reflexionsgitter (1) verbunden ist.


2.  Optischer Multiplexer/Demultiplexer nach Anspruch 1,
dadurch gekennzeichnet, daß die Abbildungsoptik zumindest
angenähert halbkugelförmig ist.


3.  Optischer Multiplexer/Demultiplexer nach Anspruch 1,
dadurch gekennzeichnet, daß die Abbildungsoptik zumindest
angenähert paraboloidförmig ist.


4.  Optischer Multiplexer/Demultiplexer nach einem der Ansprüche 1 bis 3, dadurch gekennzeichnet, daß eine Lichtleitfaser (4)
vorgesehen ist, über die beim Multiplexbetrieb der aus
Licht mit mehreren Wellenlängen bestehende Lichtstrahl
aus dem Multiplexer auskoppelbar ist und über die beim
Demultiplexbetrieb dem Demultiplexer ein aus mehreren
Wellenlängen bestehender Lichtstrahl zuführbar ist, daß
eine Gruppe von Lichtleitfasern (5) vorgesehen ist,

ZT/P1-Sm/R
05.03.1985

K.Fußgänger 2-3

daß beim Multiplexbetrieb dem Multiplexer über jede Lichtleitfaser ein Lichtstrahl mit einer einzigen Wellenlänge zuführbar ist und beim Demultiplexbetrieb aus dem Demultiplexer über jede Lichtleitfaser ein Lichtstrahl mit einer
einzigen Wellenlänge auskoppelbar ist, und daß die Winkel
($\alpha_1$, $\alpha_2$), unter denen die einzelnen Lichtleitfasern (5) der Lichtleitfasergruppe gegenüber der einzigen Lichtleitfaser (4)
angeordnet sind, abhängig von der jeweiligen Wellenlänge
und der Gitterkonstanten gewählt sind.

5. Optischer Multiplexer/Demultiplexer nach Anspruch 4,
dadurch gekennzeichnet, daß die Gruppe von Lichtleitfasern
abwechselnd aus Monomode (6)- und Multimode (7)-Licht-
leitfasern besteht.

6. Optischer Multiplexer/Demultiplexer nach Anspruch 5,
dadurch gekennzeichnet, daß die Monomodelichtleitfasern
jeweils mit einer Lichtquelle (8) verbunden sind.

7. Optischer Multiplexer/Demultiplexer nach Anspruch 5
oder Anspruch 6, dadurch gekennzeichnet, daß die Multimodefasern jeweils mit einem optisch/elektrischen Wandler (9)
verbunden sind.

8. Optischer Multiplexer/Demultiplexer nach einem der
Ansprüche 4 bis 7, dadurch gekennzeichnet, daß zumindest
ein Teil der Lichtleitfasern polarisationserhaltende Lichtleitfasern sind, die so angeordnet sind, daß die durch
sie festgelegte Hauptpolarisationsrichtung senkrecht zu
den Gitterlinien ausgerichtet ist.

**0173930**

K.Fußgänger 2-3

9. Optischer Multiplexer/Demultiplexer nach einem der Ansprüche 1 bis 8, dadurch gekennzeichnet, daß der Multiplexer/Demultiplexer in der Technik der integrierten Optik realisiert ist.

10. Optischer Multiplexer/Demultiplexer nach einem der Ansprüche 1 bis 3, dadurch gekennzeichnet, daß die Lichtstrahlen (A, E) zwischen der Abbildungsoptik (2) und den Ein/Ausgängen des Multiplexers/Demultiplexers in durch ein integriert-optisches Bauelement (100) realisierten Wellenleitern (101, 102) geführt werden, daß die Wellenleiter in diesem Bauelement so angeordnet sind, daß sie in dem den Ein/Ausgängen benachbarten Bereich zueinander parallel sind und in dem der Abbildungsoptik benachbarten Bereich so angeordnet sind, daß sie in die Richtungen der Lichtstrahlen, die von der Abbildungsoptik ausgehen oder auf sie auftreffen, zeigen.

11. Optischer Multiplexer/Demultiplexer nach Anspruch 10, dadurch gekennzeichnet, daß dieses integriert-optisches Bauelement (100), die Abbildungsoptik (2) und das Reflexionsgitter (1) insgesamt als einziges integriert-optisches Bauelement realisiert sind.

- 14 -

0173930

Fig.1a

Fig.1b

Fig.2

ELEKTRISCHES
AUSGANGS-
SIGNAL

O/E-WANDLER

LASER

Fig.3

Fig.4

0173930

Fig 5